(19) Europäisches Patentamt
European Patent Office
Office européen des brevets

(11) EP 2 453 571 B1

(12) **EUROPEAN PATENT SPECIFICATION**

(45) Date of publication and mention of the grant of the patent:
**12.03.2014 Bulletin 2014/11**

(51) Int Cl.:
***H02P 6/08*** *(2006.01)* ***H02P 6/18*** *(2006.01)*
***H02P 27/08*** *(2006.01)*

(21) Application number: **10405218.8**

(22) Date of filing: **11.11.2010**

(54) **Converter and method for driving an electric AC machine**

Wandler und Verfahren zum Antrieb einer elektrischen Wechselstrommaschine

Convertisseur et procédé de commande d'une machine électrique à courant alternatif

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.05.2012 Bulletin 2012/20**

(73) Proprietors:
- **Celeroton AG**
  **8005 Zürich (CH)**
- **ETH Zurich**
  **8092 Zürich (CH)**

(72) Inventors:
- **Fardel, Maurice**
  **4153 Reinach (CH)**
- **Zwyssig, Christof**
  **8645 Jona (CH)**
- **Tüysüz, Arda**
  **8008 Zürich (CH)**

(74) Representative: **Frei Patent Attorneys**
**Frei Patentanwaltsbüro AG**
**Postfach 1771**
**8032 Zürich (CH)**

(56) References cited:
**JP-A- 2009 022 085** **US-A1- 2004 136 133**
**US-A1- 2009 153 083**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 453 571 B1

## Description

The invention relates to the field of electrical drives. It relates to a converter and a method for driving an electric AC machine without a position sensor as described in the preamble of the corresponding independent claims.

In order to drive an electrical ac machine such as synchronous machines (with or without permanent-magnets), reluctance machines (with or without permanent magnets) or asynchronous machines, knowing the angular rotor position is either required or advantageous. In order to overcome the drawbacks of angular position sensors in the machine, several methods have been presented in the literature and in patents for determining the angular rotor position based on measurements made at the existing connections to the electrical machine. These methods are usually referred to as sensorless measurement, self-sensing or sensorless control of electrical machines. Several of these methods are based on an induced voltage in the electrical machine, which is usually proportional to the speed. Therefore, the methods become blind towards lower speeds, and especially at standstill. To solve this, several solutions have been reported. Most of them are based on measuring an inductance change dependent on angular rotor position. Some of them, such as US 2003/141865 use a signal injection and measurement circuit which generates current and voltage signals that have a lower amplitude than the inverter driving the currents for applying the machine torque. However this approach requires additional hardware. Some other methods integrate the high-frequency signal injection into the inverter and only have a special measurement setup, e.g. as in EP 0228535 A1.

Other methods also integrate the high-frequency signal injection into the inverter and superimpose the high-frequency signal and the drive signal, and use the standard measurement setup to extract the position measurement, e.g. as in JP 2009 022085. This method tries to counteract the problem of small signal of the position measurement with adapting the inverter dc voltage, however it has to use the same voltage for injecting the measurement and the drive signals as these two signals are superimposed in time, that is, applied overlapping and simultaneously.

In WO 90/12278 A1, the standard voltage source inverter (VSI) with fixed dc link voltage that also applies the torque current is used to apply voltage pulses, measure the current reaction (usually with the same current sensors that are used for the torque control), and calculate an angular rotor position based on complex space vector calculations. Several other known methods use the application of voltage pulses in order to determine the angular rotor position. Although seldom described in literature, in these methods the usual way to control the machine is to repeatedly switch between a measurement interval and a torque interval. During the measurement interval, pulses are applied to the machine and the angular rotor position is determined from measurements. During the torque interval a current is impressed into the machine in order to drive the machine with the desired torque or speed. The time of the measurement interval and the transition time in between the two intervals should be as short as possible in order to allow to apply as much torque as possible. In these methods, the same fixed dc link voltage is applied to the machine for both the measurement and the torque interval.

This is a drawback because for some electrical machines the standard VSI with fixed dc link voltage is not the ideal choice. Especially for low inductive machines, for example permanent-magnet synchronous machines with airgap windings (slotless stators), the standard VSI requires high-bandwidth current sensors and control, and supplies the motor with a high current ripple, which results in increased, undesired losses in the motor. This can be improved by increasing the VSI switching frequency and/or by the use of a filter. However, this entails additional complexity and cost. Therefore, for such machines, alternative topologies such as the pulse-amplitude modulation (PAM) inverter or the current source inverter (CSI) are the preferred choice. These topologies adapt the voltage that is applied to the motor without requiring high inverter switching frequencies. In JP 363095855 A, a special control method for a PAM inverter is presented. The standard PAM inverter consist of two parts: a standard VSI (in the case of three phases, this consists of six switches arranged in three half bridges) and a step-down converter (also called buck converter), as shown in **Figure 1:**

- In a DC-DC converter part, two power switches alternate in connecting one terminal of a current stabilising inductance 14 to a pair of DC input terminals 12a, 12b. The other terminal of the inductance 14 is connected, via a voltage stabilising capacitor 7, to one of the DC input terminals. By pulse width modulation, at the common node of the inductance 14 and the capacitor 7, from now on also called stepped down DC node 11, an adjustable average DC voltage results.
- By a multiphase inverter part 2, powered through this adjustable average DC voltage, an AC machine 3 is driven.

The PAM inverter is often used in combination with high-speed machines (in the area of 10 000 rpm up to and beyond 1 million rpm), because high-speed machines usually have low inductance, and using a PAM inverter, a distinctive reduction of switching losses in the inverter and high-frequency losses in the machine can be achieved.

US 2004/136133 discloses an inverter whit PFC circuit at the input, which allows for a control and change of the DC link voltage. US 2009/153083 discloses a PAM inverter including a sensorless control based on back EMF voltage sensing, which works above a certain speed level, usually 5-10% of the rated speed. Both inverters in both of these two references are not made for the purpose of rapid changes of the dc link voltage, as in both cases large electrolytic capacitors are used in the dc link and therefore a rapid change is not possible.

No sensorless control based on inductance change has been presented in combination with a PAM inverter. This is mainly because at low or zero speed of the electrical machine the PAM inverter applies a very low voltage to the machine because of the low induced voltage of the machine, and therefore the voltage between the positive dc link rail of the VSI part of the PAM inverter (point 1a in **Figure 1**) and the negative dc link rail of the VSI part of the PAM inverter (point 1b in **Figure 1**) is very low. However, the time of a measurement interval in the abovementioned drive method is proportional to this voltage. Therefore, a higher voltage for the measurement interval than for a torque interval would be advantageous. However, no PAM converter that is configured to achieve this has been presented so far.

WO 2006/061679 A2 discloses an inverter topology derived from the standard inverter (thus not from the PAM inverter) that has two dc link voltage levels. The two negative potentials are connected with each other and via three switches to the three machine phases. Both positive dc link voltage levels have a separate set of three switches to selectively connect the link to one of the three machine phases. In this manner, two different dc link voltages can be applied to the machine phases. The first drawback of this topology is that special switches have to be used that can block in both directions, because otherwise a short circuit between the two positive dc link voltage levels would occur. However, standard VSIs employ standard switches with antiparallel diodes, and can only block in one direction. This is for safety reasons and in order to simplify control of the switches. The second drawback of this topology is that PAM operation is not possible.

Most of the abovementioned methods to detect the position of a rotor without sensor also are applicable to linear motors for detecting the position of the moving part (corresponding to the rotor).

It is therefore an object of the invention to create a converter and a method for driving an electric AC machine of the type mentioned initially, which overcomes the disadvantages mentioned above.

These objects are achieved by a converter and a method for driving an electric AC machine according to the corresponding independent claims.

The **method** for driving an electric AC machine uses a higher voltage for a measurement interval and a lower voltage in a torque interval. This is done by means of a pulse amplitude inverter supplying the AC machine with electrical power through three or more drive connectors, and the method comprising the steps of **applying** to the three or more drive connectors, in a sequence of (alternating) torque intervals and measurement intervals ...

- during the torque intervals, one or more voltage pulses for generating a torque in the AC machine; the voltage pulses having as average height a first voltage (Vt). The torque may be a resultant net torque, averaged over one or more torque intervals. The torque acts on the rotor of the AC machine, accelerating or decelerating (braking) it or maintaining it at a constant speed when under load. In the case of the AC machine being a linear motor, the term rotor is understood to refer to the motor element moving relative to the static motor element. Typically this is the element which carries the magnetic coils supplied by the machine terminals.
- during the measurement intervals, one or more voltage pulses for measuring the position of the rotor of the AC machine; the voltage pulses having as average height a second voltage (Vm);
- wherein the second voltage (Vm) is at least two times the first voltage (Vt).

Notes on terminology:

- A converter converts a DC or AC voltage to a DC or AC voltage. A converter can be an inverter (DC to AC) or a rectifier (AC to DC) or an AC to AC or a DC to DC converter.

- The voltage height is measured with respect to a common reference voltage such as one of the busbars supplying the AC machine, the star point of a multiphase system.

The "one or more voltage pulses" mentioned in most cases, especially in the measurement interval, correspond to more than one, that is, to a sequence of pulses.

Providing separate intervals at which different voltages are applied for driving the motor and for determining its position allows on the one hand to apply high voltages to perform a sufficiently precise measurement of the position, and on the other hand to apply the low voltages used when driving the motor at low speeds by means of pulse amplitude modulation (PAM).

In an embodiment, the pulse amplitude modulation inverter comprises a DC-DC converter supplying a multiphase inverter with an intermediate DC link voltage, the multiphase inverter supplying the drive by selectively applying the intermediate DC link voltage to the three or more drive connectors, and the method comprises the steps of

- during the torque intervals, controlling the DC-DC converter to generate the intermediate DC link voltage corresponding to the first voltage (Vt) and controlling the multiphase inverter to generate one or more pulses that generates the torque,
- during the measurement intervals, controlling the DC-DC converter to generate the intermediate DC link voltage corresponding to the second voltage (Vm) and controlling the multiphase inverter to generate one or more pulses at the drive connectors for measuring the position of the rotor of the AC machine, and determining the position of the rotor of the AC machine.

Thus, the converter is split up into two parts, that is, into the DC-DC converter and the multiphase inverter. The DC-DC converter on the one hand supplies the intermediate DC link with the varying voltage used for PAM, and on the other hand provides the higher voltage for the measurements.

Preferably, at least one of the following holds:

- the length (Tt) of the torque intervals is less than 1000 microseconds;
- the length (Tm) of the measurement intervals is less than 500 microseconds;
- a transition time (Ti) between the torque intervals and measurement intervals, during which the intermediate DC link voltage changes from the first voltage (Vt) to the second voltage (Vm), or back from the second voltage (Vm) to the first voltage (Vt), is less than ten microseconds;
- the length of the torque intervals (Tt) is longer than the length of the measurement intervals plus the sum of the transition times (Ti) preceding (with rising voltage) and following (with falling voltage) the measurement intervals. In other words, the torque interval is at least half of the repetition time (Tr) of the torque and measurement intervals. Preferably both rising and falling transition times are equal, and then the length of the torque intervals (Tt) is longer than the length of the measurement interval plus twice the transition time (Tm+2*Ti).
- the first voltage (Vt) lies in the range of 0V to 20V and second voltage (Vm) lies in the range of 20V to 100V;
- the rate of change of the intermediate DC link voltage when changing from the first voltage (Vt) to the second voltage (Vm) and vice versa is more than 1 V/microsecond.

Measurements on which the control of the torque and/or measurement pulses can be based are:

- during a voltage pulse in the measurement interval the current response in one or more phase or the current response in the intermediate dc link is measured one or several times.

- during a voltage pulse in the measurement interval a voltage on one or more open machine terminals is measured.

In an embodiment, the converter for driving an electric AC machine is a pulse amplitude inverter. It is connected,

- at a supply side, to a positive and a negative DC input line and,
- at a drive side, to three or more drive connectors.

It comprises

- a DC-DC converter connected to the positive and the negative DC input lines and feeding an intermediate DC link which has a variable voltage intermediate busbar (1a) and a reference voltage intermediate busbar (1b);
- a multiphase inverter connected to the variable voltage (1a) and the reference voltage (1b) intermediate busbar and feeding the three or more drive connectors; characterised in that the DC-DC converter is configured to allow for a rapidly changing voltage between the variable voltage (1a) and the reference voltage (1b) intermediate busbar.

In an embodiment, the DC-DC-converter is a **step-down converter,** that is, a converter that is supplied by a DC voltage supply and provides, at the intermediate link, an intermediate DC voltage which may be controlled to be lower than or equal to the supply voltage.

In an embodiment, the DC-DC converter comprises a **lumped capacitance** connected between the variable voltage and the reference voltage intermediate busbar, and wherein the capacity of the lumped capacitance is less than 50 microfarad and preferably less than 30 microfarad.

In an embodiment, the DC-DC converter does **not** comprise a **lumped capacitance** connected directly between the variable voltage and the reference voltage intermediate busbar. Consequently, the intermediate DC link voltage may change rapidly, which is required for fast a change between torque and measurement intervals and back again. Note: The term "capacitance" denotes the function of a circuit element, the term "capacitor" denotes the element itself. The term "lumped capacitance" is understood to denote a capacitance implemented as a discrete element, that is, a capacitor, which is designed as a desired element of the circuit. This is in contrast to parasitic or distributed capacitances which can be observed in virtually any circuit, depending on the frequency considered and the degree of detail of the observation.

In an embodiment, the DC-DC converter comprises a stepped down DC node at which the stepped down DC output of the DC-DC converter appears, and a **disconnection switch** is arranged between the stepped down DC node and the variable voltage intermediate busbar. This allows to connect the two when feeding the variable voltage intermediate busbar with the stepped down voltage, or to disconnect them from one another when feeding the variable voltage intermediate busbar with a higher or with the full voltage, in particular with the input voltage of the DC-DC converter. Consequently, any capacitance between the stepped down DC node and the reference voltage intermediate busbar is disconnected, allowing for the desired fast change of their relative voltage.

In an embodiment, the DC-DC converter comprises a **supply switch** arranged between the variable voltage intermediate busbar and the DC input terminal which carries the full voltage applicable to the intermediate DC link, with optionally a supply impedance arranged in series with the supply switch.

The "DC input terminal which carries the full voltage applicable to the intermediate DC link" is the terminal whose voltage is reduced to provide that of the intermediate DC link. In other words, if the variable voltage intermediate busbar is positive with regard to the reference voltage intermediate busbar, then this DC input terminal is the positive DC input terminal, and if the variable voltage intermediate busbar is negative with regard to the reference voltage intermediate busbar, then this DC input terminal is the negative DC input terminal.

This allows, especially when a non-negligible capacitance is present between the intermediate busbars is present, and when no disconnection switch is present, to charge or discharge this capacitance and to change the voltage of the variable voltage intermediate busbar faster than would be possible with the ordinary step-down circuitry alone, which is limited e.g. by its maximum allowable current or its impedance.

In an embodiment, the DC-DC converter comprises a branch comprising at least one of a **supply switch and a supply impedance** in a series connection arranged between the variable voltage intermediate busbar and a bridge node which can be switched to be connected to either the positive DC input terminal or the negative DC input terminal. This bridge node can thus be supplied by pulse-width modulation with the alternating input voltages, resulting in an average voltage lower than the input voltage. This allows to provide, in the measurement interval, a stepped-down and changeable voltage as well. The switches connecting the bridge node to the DC input terminals can be the same as those of the DC-DC converter already described, or they can be an additional pair of switches.

In an embodiment, the converter comprises a second multiphase switching arrangement for individually connecting each of the drive connectors to the DC input terminal which carries the full voltage relative to the intermediate DC link. This second multiphase switching arrangement can be a full inverter bridge able to connect each of the drive connectors to both of the DC input terminals (but not at the same time). Alternatively, the multiphase inverter comprises only the power switches of half an inverter bridge, able to connect the drive connectors to the positive DC input terminal, while the connection with the negative DC input terminal is accomplished by means of the lower half of the multiphase inverter described earlier.

In an embodiment, the multiphase inverter comprises **power switches** for selectively connecting the positive and the negative intermediate busbar to the three or more drive connectors, and wherein the each of the power switches comprises a semiconductor switch and a parallel free-wheeling diode. The semiconductor power switches selectively and individually connect each of the three or more drive connectors to the positive or the negative intermediate busbar, with the antiparallel diodes reduce switching losses etc. as in any standard inverter. It consequently is possible to use a standard converter with standard power switches.

In an embodiment, the converter comprises a **control module** controlling the switching on and off of power switches of the DC-DC converter and, the control module being configured (or programmed) to control the power switches to apply to the three or more drive connectors, in a sequence of torque intervals and measurement intervals,

- during the torque intervals, one or more voltage pulses for generating a torque by connecting the three or more drive connectors to two busbars having a first voltage difference between them;
- during the measurement intervals, one or more voltage pulses for measuring the position of the rotor of the AC machine by connecting the three or more drive connectors to two busbars having a second voltage difference between them;
- wherein the second voltage is at least two times the first voltage difference.

Further embodiments are evident from the dependent patent claims. Features of the method claims may be combined with features of the device claims and vice versa.

## BRIEF DESCRIPTION OF THE DRAWINGS

The subject matter of the invention will be explained in more detail in the following text with reference to exemplary embodiments which are illustrated in the attached drawings, which schematically show:

| | |
|---|---|
| **Figure 1** | a standard PAM inverter topology; |
| **Figure 2** | an embodiment of an inverter according to the invention; |
| **Figure 3** | a trajectory of intermediate link voltage over time; |
| **Figure 4** | voltage pulses applied to the AC machine and resulting currents; and |
| **Figure 5-11** | different converter topologies. |

The reference symbols used in the drawings, and their meanings, are listed in summary form in the list of reference symbols. In principle, identical parts are provided with the same reference symbols in the figures.

## DETAILED DESCRIPTION

**Figure 2** schematically shows the structure of an embodiment of an inverter according to the invention: The inverter comprises a DC-DC converter 5 supplied by a DC source 6 via DC input terminals 12, a positive DC input terminal 12a and a negative DC input terminal 12b. The DC-DC converter 5 in turn supplies or powers an intermediate DC link with positive and negative intermediate busbars 1a,1b. The intermediate DC link powers a multiphase inverter 2 which allows to selectively connect the positive and negative intermediate busbars 1a, 1b to drive connectors 13 (may also be called motor terminals) of an AC machine 3. Measurement elements that may be required for measuring currents and / or voltages in or at the multiphase inverter 2 and AC machine 3 in order to control the operation of the AC machine 3 are not shown. The placement of such elements and control algorithms for controlling the speed and/or torque of the AC machine 3 are well known to one skilled in the art.

The DC-DC converter 5 is modified as explained in connection with the following figures, and optionally a second multiphase switching arrangement 4 may be present for applying a voltage to the drive connectors 13. A control module 15 is configured to process measurements and to control the operation of the power switches of the converter. Here and in the following figures, power switches are symbolized by a switch with a parallel free-wheeling diode. The switch represents a semiconductor switch such as a GTO, IGBT, Thyristor, etc.

While this and the following examples show the positive voltage (at the positive DC input terminal 12a) to be stepped down, and the voltage at the positive intermediate busbar 1a being changed, it is obviously possible to practice the invention with analogous circuits in which the voltage at the negative intermediate busbar 1b is changed, or with circuits in which the voltages at both the positive and negative intermediate busbar 1a, 1b are changed in order to provide a varying intermediate DC link voltage to the multiphase inverter 2. In a more general sense, therefore the positive intermediate busbar 1a is a variable voltage intermediate busbar, and the negative intermediate busbar 1b is a reference voltage intermediate busbar.

**Figure 3** shows the alternation between torque intervals and measurement intervals. A torque interval time Tt should take the major part of a repetition time Tr. This is because only during the torque interval the electrical machine is driven according to the requirements of an application. Only during the torque interval can the torque be applied and can the speed or the angular position of the electrical machine be controlled. Therefore a measurement interval time Tm and a transition time Ti should be as small as possible. However, the measurement interval and the transition are required in order to determine the angular position of the machine without additional position sensors. The measurement interval is inserted after the repetition period Tr. Usually, this period is fixed, meaning that the measurement interval repeats regularly. In another variant, the repetition period is variable and, for example, dependent on the rotational speed of the machine. In all cases, the repetition period depends on the required accuracy of the position detection and on the maximal targeted machine speed. For a brushless DC machine that is driven in six-step mode, the position has to be detected at least every 60° electrical degrees. Therefore the maximal repetition period is calculated to be

$$T_{r,min} = \frac{1}{6}\frac{1}{p}\frac{1}{f_m}$$

where p is the pole-pair number of the machine and fm is the mechanical frequency of the machine. In order to guarantee that for the majority of time torque is applied to the machine, the condition

$$T_m + 2T_i < 0.5T_{r,min}$$

has to be fulfilled. As an example, if the target maximal speed for the machine is 30'000 rpm, and a torque interval percentage of 80% is required (meaning that during 80% of the time torque is applied to the machine), then the maximal time for the measurement interval and the associated two transitions is 67 $\mu$s. This means that the transition time Ti should be in the area of a few microseconds. This example shows that a short measurement interval and a fast transition is required. In general, rotations speeds up to 500'000 rpm are conceivable.

The induced voltage in a permanent-magnet machine (also called back EMF) is proportional to the speed. Therefore, the average output voltages of an inverter applied to the machine terminals are usually set according to the maximal speed of the machine. Driving the machine at a fraction of the maximal speed therefore requires only this fraction of the voltage. Common inverters generate this fraction of the voltage by applying the input voltage modulated by pulse-with modulation. This means that the voltage in between the positive and the negative intermediate busbars 1a, 1b always is the same as the input voltage. Alternative inverter topologies, called pulse-amplitude modulation (PAM) inverters allow the DC link voltage in between intermediate busbars 1a, 1b to change. This inverter topology reduces the losses in the machine. The topology of a standard PAM inverter is shown in **Figure 1**. Methods for determining switching frequencies, shaping the drive currents, choosing and controlling the intermediate DC link voltage or current are known to one skilled in the art. For example:

- K Taniguchi and A. Okumura, "A PAM inverter system for vector control of induction motor, " in Proceedings of Power Conversion Conference (PCC '93), 1993, pp. 478—483 reports the PAM control of an asynchronous machine.
- In K.-H. Kim and M.-J. Youn, "Performance comparison of PWM inverter and variable dc link inverter schemes for high-speed sensorless control of BLDC motor, " Electronics Letters, vol. 38, no. 21, pp. 1294—1295, 2002, the PAM inverter is called a variable dc link inverter.
- In I. Takahashi, T Koganezawa, G. Su, and K. Ohyama, "A super high speed PM motor drive system by a quasi-current source inverter, " IEEE Transactions on Industry Applications, vol. 30, no. 3, pp. 683—690, May-Jun. 1994, a similar topology is described driving a high-speed synchronous permanent-magnet motor.

During the torque interval, the DC link voltage $V_{1a-lb}$ between the intermediate busbars 1a, 1b is low, depending on the speed of the electrical machine and the voltage drops in the apparatus and the machine. This low voltage is generated by stepping down the input voltage.

During the measurement interval, the DC link voltage *V1a-1b* between the intermediate busbars 1a, 1b is higher than in the torque interval. During the measurement interval, the angular position of the machine rotor is measured according to commonly known methods:

- The first reference appears in M. Schroedl, "DETECTION OF THE ROTOR POSITION OF A PERMANENT MAGNET SYNCHRONOUS MACHINE AT STANDSTILL, " in Proceedings of ICEM, 1988.
- In P.B. Schmidt, M.L. Gasperi, G. Ray, A.H. Wijenayake, "Initial Rotor Angle Detection OfA Non-Salient Pole Permanent Magnet Synchronous Machine, " in Proceedings of IEEE Industry Applications Society annual Meeting, 1997 an overview of such methods is given.

Usually, voltage pulses are applied to the machine phases. As an example, in **Figure** 4 a positive voltage pulse is applied between two machine phases followed by a negative voltage pulse. The time history of the voltage $V_{ph-ph}$ between the two corresponding drive connectors 13 is shown, and below it the resulting phase current $i_{ph}$. From appropriate measurements of the resulting phase currents the angular position of the rotor can be calculated. In order to extract the angular position with high accuracy, a high peak value of the current, in the range of the rated current of the electrical machine, should be reached. The current slope shown in **Figure 4** is proportional to the applied voltage. Therefore, the higher the voltage $V_{1a-1b}$ between the intermediate busbars 1a, 1b is, the shorter the time required to reach the desired current peak gets. Therefore, the length of a measurement interval Tm is inversely proportional to $V_{1a-1b}$. In order to make this time as short as possible, $V_{1a-1b}$ should therefore be as high as possible. The highest voltage that is already present in the apparatus is the input voltage, therefore in one embodiment the input voltage is used directly for the measurement interval. Other possibilities include that a higher or lower voltage generated from the input voltage is used for the measurement interval.

In between torque and measurement interval, $V_{1a-1b}$ has to change from low to high and vice versa. This transition time Ti should be as short as possible. How fast this transition can be effected depends on the topology of the apparatus. Therefore, apparatus topologies are described in the following, which allow for such a short transition time.

In order to work with the abovementioned method, an apparatus is required that can apply a low and a high voltage to the AC machine 3, and that can very quickly effect the transition from a low to high voltage level and vice versa. Furthermore, in order to have low losses in the machine, the low voltage being applied to the machine terminals has to be constant and should therefore not generated by chopping a higher voltage (e.g. the input voltage) with pulse width modulation (PWM). Finally, the apparatus is built with standard components, meaning that the all the semiconductor switches have antiparallel diodes. This is important especially for the switches that are used for the torque interval, since they supply the power to the AC machine 3. They further require safety protection, such as the antiparallel diodes for freewheeling if the control fails and all switches are turned off.

For the most common machine type, a three-phase machine, the generic elements of the converter are shown in **Figure 2.** The AC machine 3 is powered from the DC source 6 through the DC-DC converter 5 and the multiphase inverter 2. The multiphase inverter 2 typically is a three-phase inverter comprising six switches with antiparallel diodes, and the DC-DC converter 5 typically is a step-down converter. Altogether, the basic structure is that of a pulse amplitude modulated (PAM) inverter. In order to be able to apply a higher voltage during the measurement interval, two options exist:

- As first option, an additional or second multiphase switching arrangement 4 can be used to apply a higher voltage to the machine directly. In this option the high voltage also appears between the positive and negative intermediate busbars 1a, 1b due to the antiparallel diodes of the multiphase inverter 2. Therefore, the DC-DC converter 5 has to be designed such that it can tolerate a fast increase of the voltage in between points 1a and 1b. This option has the advantage that the second multiphase switching arrangement 4 does not have to be designed for the power demand of the machine, and so, for example, smaller semiconductor devices can be used and the current measurement can be adapted, e.g. by only implementing the AC current measurement.

- As the second option, the DC-DC converter 5 is modified such that besides applying the low voltage for the torque interval it can also apply a high voltage in between the positive and negative intermediate busbars 1a, 1b and this voltage can then be applied to the drive connectors 13 of the AC machine 3 by means of the multiphase inverter 2. This has the advantage that the second multiphase switching arrangement 4 is not needed and less elements are required. Therefore, the second multiphase switching arrangement 4 is only optional when implementing the inventive method.

In summary, the apparatus shown in **Figure 2** has the capability to change the DC link voltage in between points 1a and 1 b fast (in the range of a few microseconds) in order to switch in between torque and measurement interval. This also means that any capacitance connected permanently in between the intermediate busbars 1a, 1b has to be small, in the range of a few μF or less, otherwise currents exceeding the rated machine currents would be required to change the DC link voltage. As an example for a low voltage inverter with an input voltage of 48 V the capacitor at zero speed has to be charged and discharged with the full 48 V. Let the maximal transition time Ti be 2 microseconds (see the calculations above). The maximal phase currents of low voltage machines are usually below 10 A. Allowing for twice this current for the charging/discharging during the transition, this leads to a maximal allowed capacitance of

$$C_{max} = \frac{\Delta Q}{\Delta U} = \frac{I \cdot T_i}{\Delta U} = \frac{20A \cdot 2\mu s}{48V} = 0.83\mu F$$

Lower currents or higher voltages cause the maximal capacitance to even be smaller. A larger capacitance can be connected between the intermediate busbars 1a, 1b during one of the (torque or measurement) intervals, but then an element to disconnect this capacitance at the transition has to be provided. A further requirement on the apparatus is that it contains a standard multiphase inverter multiphase inverter 2 comprising semiconductor switches with antiparallel diodes.

Several options exist to modify and extend presently known inverter topologies in order to fulfil the abovementioned requirements. All topologies are described for the most common motor type, the three-phase motor. However, also different phase numbers are possible, e.g. in a linear drive often two phases requiring eight switches (two full bridges) in the inverter are possible.

In **Figure 5** a possible topology is shown. The standard PAM inverter is extended by a disconnection switch 8 and a supply switch 9. The disconnection switch 8 is arranged to connect or disconnect a stepped down DC node 11 of the DC-DC converter 5 to/from the variable voltage intermediate busbar 1a of the intermediate DC link, which in the present case is the positive intermediate busbar 1a. the stepped down DC node 11 in the present case is the circuit node joining the current stabilising inductance 14 and the voltage stabilizing capacitor 7 of the DC-DC converter 5. The supply switch 9 is arranged to connect or disconnect the same busbar to/from the corresponding input terminal, in the present case the positive DC input terminal 12a. If the disconnection switch 8 is closed and the supply switch 9 is open, the output voltage and capacitor of the step-down converter 5 is connected to the intermediate busbars 1a, 1b. These switch positions are used for the torque interval. Vice versa, if the disconnection switch 8 is open and the supply switch 9 is closed, then the input voltage (at DC input terminals DC input terminals 12a, 12b) is connected to the intermediate busbars 1a, 1b. These switch positions are used for the measurement interval. The transition between the switch positions can be very fast as no capacitor (or only relatively small, distributed parasitic capacitors) have to be charged/discharged.

**Figure 6** shows the extension of the standard PAM inverter topology with the supply switch 9 but without the disconnection switch 8: If the capacitance of the output capacitor 7 of the step-down converter 5 is sufficiently small, the disconnection switch 8 can be avoided and by means of the supply switch 9 the capacitor 7 can be charged by establishing a short circuit to the input voltage.

A drawback of the topology in **Figure 6** is the large short circuit current flowing into the capacitor 7 when turning on the supply switch 9. This large short circuit current can be reduced by adding a resistive and/or inductive component in a series to the supply switch 9. This is shown as a supply impedance 10 in **Figure 7**.

The supply switch 9 and the supply impedance 10 can also be connected to the middle point of the half bridge of the step down converter, as shown in **Figure 8**. This has the advantage that also a different voltage than the input voltage can be generated during the measurement interval. This is possible by applying a PWM switching pattern to the half bridge of the step-down converter in the measurement interval as well.

A further possibility, as shown in **Figure 9**, is to add a second step down converter to the standard PAM converter. This allows for a faster charging of the capacitor 7 than with only one step-down converter. Furthermore, the second step-down converter can be dimensioned for higher short time currents in order to allow a faster charging of capacitor 7. In both embodiments of **Figure 8** and **Figure 9,** the DC-DC converter 5 comprises a branch comprising at least one of a supply switch 9 and a supply impedance 10, 14b in a series connection arranged between the variable voltage intermediate busbar 1a and a bridge node which can be switched to be connected to either the positive DC input terminal 12a or the negative DC input terminal 12b.

In **Figure 10** and **Figure 10** two different embodiments are shown for extending the standard PAM inverter with the second multiphase switching arrangement 4. In both cases the DC-DC converter 5 is extended with a disconnection switch 8 in order to decouple the capacitor 7 from the intermediate DC link and to allow for a fast change of the voltage in between these two points. The voltage on the machine and therefore also in between points 1a and 1 b during the measurement interval is then set by the second multiphase switching arrangement 4, which can

- either be an additional three-phase inverter that is connected to the input voltage as shown in **Figure 10**,
- or only the upper switches of a three-phase inverter as shown in **Figure 11**. In the latter case, the lower switches of the normal inverter (2) are used to connect the negative rail of the input voltage to the machine.

While the invention has been described in present embodiments, it is distinctly understood that the invention is not limited thereto, but may be otherwise variously embodied and practised within the scope of the claims.

For example, while the present examples show step-down converters 5 based on a single inductance, DC-DC converters based on a transformer may be used as well.

**LIST OF DESIGNATIONS**

| | |
|---|---|
| 1a, b | positive and negative intermediate busbar |
| 2 | multiphase inverter |
| 3 | AC machine |
| 4 | second multiphase switching arrangement |
| 5 | DC-DC converter |
| 6 | DC source |
| 7 | capacitor |
| 8 | disconnection switch |
| 9 | supply switch |
| 10 | supply impedance |
| 11 | stepped down DC node |
| 12a, b | DC input terminals |
| 13 | drive connectors |
| 14, 14a, 14b | inductance |
| 15 | control module |

**Claims**

1. A **method** for driving an electric AC machine (3) by means of a pulse amplitude modulation inverter supplying the AC machine (3) with electrical power through three or more drive connectors (13), **characterised in that** the method comprises the steps of **applying** to the three or more drive connectors (13), in a sequence of alternating torque intervals and measurement intervals

   • during the torque intervals, one or more voltage pulses for generating a torque in the AC machine 3; the voltage pulses having as height a first voltage (Vt),
   • during the measurement intervals, one or more voltage pulses for measuring the position of the rotor of the AC machine; the voltage pulses having as height a second voltage (Vm);
   • wherein the second voltage (Vm) is at least two times the first voltage (Vt).

2. The method for driving an electric AC machine of claim 1, wherein the pulse amplitude modulation inverter comprises a DC-DC converter (5) supplying a multiphase inverter (2) with an intermediate DC link voltage, the multiphase inverter (2) supplying the drive (3) by selectively applying the intermediate DC link voltage to the three or more drive connectors (13), and the method comprises the steps of

   • during the torque intervals, controlling the DC-DC converter (5) to generate the intermediate DC link voltage corresponding to the first voltage (Vt) and controlling the multiphase inverter (2) to generate the one or more voltage pulses that generate the torque,
   • during the measurement intervals, controlling the DC-DC converter (5) to generate the intermediate DC link voltage corresponding to the second voltage (Vm) and controlling the multiphase inverter (2) to generate one or more pulses at the drive connectors (13) for measuring the position of the rotor of the AC machine, and determining the position of the rotor of the AC machine (3).

3. The method for driving an electric AC machine of claim 1 or 2, wherein during a transition time (Ti) the intermediate DC link voltage changes from the first voltage (Vt) to the second voltage (Vm) or back, and

   • the length of the torque intervals (Tt) is longer than the length of the measurement intervals plus the sum of the transition times (Ti) preceding and following the measurement intervals.

4. The method for driving an electric AC machine of one of the preceding claims, wherein an intermediate DC link voltage supplies a multiphase inverter (2) which in turn supplies the drive connectors (13), and

   • the rate of change of the intermediate DC link voltage when changing from the first voltage (Vt) to the second voltage (Vm) or back is more than 1 V/microsecond.

5. The method for driving an electric AC machine of one of the preceding claims, wherein at least one of the following holds:

   • the length (Tt) of the torque intervals is less than 1000 microseconds;
   • the length (Tm) of the measurement intervals is less than 500 microseconds;
   • a transition time (Ti) between the torque intervals and measurement intervals, during which the intermediate DC link voltage changes from the first voltage (Vt) to the second voltage (Vm) or back, is less than ten microseconds;
   • the first voltage (Vt) lies in the range of 0V to 20V and second voltage (Vm) lies in the range of 20V to 100V;

6. A **converter** for driving an electric AC machine, the converter being a **pulse amplitude modulation inverter**
connected,

   • at a supply side, to a positive and a negative DC input line (12a, 12b) and,
   • at a drive side, to three or more drive connectors (13), and

comprising

   • a DC-DC converter (5) connected to the positive and the negative DC input lines (12a, 12b) and feeding an intermediate DC link which has a variable voltage intermediate busbar (1a) and a reference voltage intermediate busbar (1b);
   • a multiphase inverter (2) connected to the variable voltage (1a) and the reference voltage (1b) intermediate busbar and feeding the three or more drive connectors (13);

**characterised in that** the converter comprises a **control module** (15) controlling the switching on and off of power switches of the DC-DC converter (5), the control module (15) being configured to control the power switches to apply to the three or more drive connectors, in a sequence of alternating torque intervals and measurement intervals,

   • during the torque intervals, one or more voltage pulses for generating a torque by connecting the three or more drive connectors (13) to two busbars (1a, 1b) having a first voltage difference between them;
   • during the measurement intervals, one or more voltage pulses for measuring the position of the rotor of the AC machine by connecting the three or more drive connectors (13) to two busbars (1a, 1b) having a second voltage difference between them;

wherein the second voltage is at least two times the first voltage difference.

7. The converter of claim 6, wherein the DC-DC-converter (5) is a step-down converter.

8. The converter of claim 6 or 7, wherein the DC-DC converter (5) comprises a **lumped capacitance** (7) connected between the variable voltage (1a) and the reference voltage (1b) intermediate busbar, and wherein the capacity of the lumped capacitance (7) is less than 50 microfarad and preferably less than 30 microfarad.

9. The converter of claim 6 or 7, wherein the DC-DC converter (5) does **not** comprise a **lumped capacitance** connected directly between the variable voltage (1a) and the reference voltage (1b) intermediate busbar.

10. The converter of one of claims 6 to 8, wherein the DC-DC converter (5) comprises a stepped down DC node (11) at which the stepped down DC output of the DC-DC converter (5) appears, and a **disconnection switch (8)** is arranged between the stepped down DC node (11) and the variable voltage intermediate busbar (1a).

11. The converter of one of claims 6 to 10, wherein the DC-DC converter (5) comprises a **supply switch (9)** arranged between the variable voltage intermediate busbar (1a) and the DC input terminal (12a) which carries the full voltage applicable to the intermediate DC link, with optionally a supply impedance (10) arranged in series with the supply switch (9).

12. The converter of one of claims 6 to 10, wherein the DC-DC converter (5) comprises a branch comprising at least one of a **supply switch (9) and a supply impedance (10,** 14b) in a series connection arranged between the variable voltage intermediate busbar (1a) and a bridge node which can be switched to be connected to either the positive DC input terminal (12a) or the negative DC input terminal (12b).

**13.** The converter of claim 10, comprising a second multiphase switching arrangement (4) for individually connecting each of the drive connectors (13) to the DC input terminal (12a) which carries the full voltage relative to the intermediate DC link.

**14.** The converter of one of claims 6 to 13, wherein the multiphase inverter (2) comprises **power switches** for selectively connecting the positive (1a) and the negative (1b) intermediate busbar to the three or more drive connectors, and wherein each of the power switches comprises a semiconductor switch and a parallel free-wheeling diode.

**Patentansprüche**

**1.** Verfahren zum Antrieb einer elektrischen Wechselstrommaschine (3) mittels eines Pulsamplitudenmodulations-Wechselrichters, der die Wechselstrommaschine (3) mit elektrischem Strom über drei oder mehr Antriebsanschlüsse (13) versorgt, **dadurch gekennzeichnet, dass** das Verfahren die Schritte aufweist, an die drei oder mehr Antriebsanschlüsse (13) in einer Aufeinanderfolge abwechselnder Drehmomentintervalle und Messintervalle

- während der Drehmomentintervalle, einen oder mehr Spannungspulse zum Erzeugen eines Drehmomentes in der Wechselstrommaschine (3) anzulegen; wobei die Spannungspulse als Höhe eine erste Spannung (Vt) haben,
- während der Messintervalle einen oder mehr Spannungspulse zum Messen der Position des Rotors der Wechselstrommaschine anzulegen; wobei die Spannungspulse als Höhe eine zweite Spannung (Vm) haben;
- wobei die zweite Spannung (Vm) wenigstens das Zweifache der ersten Spannung (Vt) ist.

**2.** Verfahren zum Antrieb einer elektrischen Wechselstrommaschine nach Anspruch 1, wobei der Pulsamplitudenmodulations-Wechselrichter einen DC-DC (Gleichstrom-Gleichstrom) Wandler (5) aufweist, der einen mehrphasigen Wechselrichter (2) mit einer DC Zwischenkreisspannung versorgt, wobei der mehrphasige Wechselrichter (2) den Antrieb (3) versorgt, indem er selektiv die DC Zwischenkreisspannung an die drei oder mehr Antriebsanschlüsse (13) anlegt, und das Verfahren die Schritte aufweist:

- während der Drehmomentintervalle, Steuern des DC-DC Wandlers (5), um die der ersten Spannung (Vt) entsprechende DC Zwischenkreisspannung zu erzeugen und Steuern des mehrphasigen Wechselrichters (12), um den einen oder mehr Spannungspulse zu erzeugen, die das Drehmoment erzeugen,
- während der Messintervalle, Steuern des DC-DC Wandlers (5), um die der zweiten Spannung (Vm) entsprechende DC Zwischenkreisspannung zu erzeugen und Steuern des mehrphasigen Wechselrichters (12), um einen oder mehr Pulse an den Antriebsanschlüssen (13) zum Messen der Position des Rotors der Wechselstrommaschine und zum Bestimmen der Position des Rotors der Wechselstrommaschine (3) zu erzeugen.

**3.** Verfahren zum Antrieb einer elektrischen Wechselstrommaschine nach Anspruch 1 oder 2, wobei während einer Übergangszeit (Ti) die DC Zwischenkreisspannung von der ersten Spannung (Vt) zu der zweiten Spannung (Vm) oder zurück wechselt, und

- die Länge der Drehmomentintervalle (Tt) länger als die Länge der Messintervalle plus der Summe der den Messintervallen vorausgehenden und folgenden Übergangszeiten (Ti) ist.

**4.** Verfahren zum Antrieb einer elektrischen Wechselstrommaschine nach einem der vorstehenden Ansprüche, wobei eine DC-Zwischenkreisspannung einen mehrphasigen Wechselrichter (2) versorgt, welcher wiederum die Antriebsanschlüsse (13) versorgt, und

- die Änderungsgeschwindigkeit der DC-Zwischenkreisspannung, wenn sie sich von der ersten Spannung (Vt) auf die zweite Spannung (Vm) oder zurück verändert, mehr als 1 Volt/Mikrosekunde ist.

**5.** Verfahren zum Antrieb einer elektrischen Wechselstrommaschine nach einem der vorstehenden Ansprüche, wobei wenigstens eines von Nachstehendem gilt:

- die Länge (Tt) der Drehmomentintervalle ist kürzer als 1000 Mikrosekunden;
- die Länge (Tm) der Messintervalle ist kürzer als 500 Mikrosekunden;
- eine Übergangszeit (Ti) zwischen den Drehmomentintervallen und den Messintervallen, während welcher sich die DC Zwischenkreisspannung von der ersten Spannung (Vt) auf die zweite Spannung (Vm) oder zurück verändert, ist kürzer als 10 Mikrosekunden;
- die erste Spannung (Vt) liegt in dem Bereich von 0 V bis 20 V und die zweite Spannung (Vm) liegt in dem Bereich von 20 V bis 100 V;

**6.** Wandler zum Antreiben einer elektrischen Wechselstrommaschine, wobei der Wandler ein Pulsamplitudenmodulations-Wechselrichter ist,
verbunden

- an einer Versorgungsseite, mit einer positiven und negativen DC Eingangsleitung (12a, 12b) und
- an einer Antriebsseite, mit drei oder mehr Antriebsanschlüssen (13), und

aufweisend

- einen DC-DC Wandler (5), der mit den positiven und negativen DC Eingangsleitungen (12a, 12b) verbunden ist und einen DC Zwischenkreis speist, welcher eine Zwischensammelleitung (1a) mit variabler Spannung und eine Zwischensammelleitung (1b) mit einer Bezugsspannung (1b) hat;
- einen mehrphasigen Wechselrichter (2), der mit den Zwischensammelleitungen mit der variablen Spannung (1a) und mit der Bezugsspannung (1b) verbunden ist und die drei oder mehr Antriebsanschlüsse (13) speist;

**dadurch gekennzeichnet, dass** der Wandler ein Steuermodul (15) aufweist, die das Ein- und Ausschalten von Leistungsschaltern des DC-DC Wandlers (5) steuern, wobei das Steuermodul (15) dafür konfiguriert ist, die Leistungsschalter zu steuern, um an die drei oder mehr Antriebsanschlüsse in einer Folge abwechselnder Drehmomentintervalle und Messintervalle,

- während der Drehmomentintervalle, einen oder mehr Spannungspulse zum Erzeugen eines Drehmomentes anzulegen, indem die drei oder mehr Antriebsanschlüsse (13) mit zwei Sammelleitungen (1a, 1b) mit einer ersten Spannungsdifferenz dazwischen verbunden werden;
- während der Messintervalle, einen oder mehr Spannungspulse zum Messen der Position des Rotors der Wechselstrommaschine anzulegen, indem die drei oder mehr Antriebsanschlüsse (13) mit zwei Sammelleitungen (1a, 1b) mit einer zweiten Spannungsdifferenz dazwischen verbunden werden;
- wobei die zweite Spannung wenigstens das Zweifache der ersten Spannung ist.

**7.** Wandler nach Anspruch 6, wobei der DC-DC Wandler (5) ein Abwärtswandler ist.

**8.** Wandler nach Anspruch 6 oder 7, wobei der DC-DC Wandler (5) eine konzentrierte Kapazität (7) aufweist, die zwischen die Zwischensammelleitungen mit der variablen Spannung (1a) und mit der Bezugsspannung (1b) geschaltet ist, und wobei der Kapazitätswert der konzentrierten Kapazität (7) kleiner als 50 Mikrofarad und bevorzugt kleiner als 30 Mikrofarad ist.

**9.** Wandler nach Anspruch 6 oder 7, wobei der DC-DC Wandler (5) keine konzentrierte Kapazität aufweist, die direkt zwischen die Zwischensammelleitungen mit der variablen Spannung (1a) und mit der Bezugsspannung (1b) geschaltet ist.

**10.** Wandler nach einem der Ansprüche 6 bis 8, wobei der DC-DC Wandler (5) einen heruntergesetzten DC-Knoten (11) aufweist, an welchem die heruntergesetzte DC-Ausgangsspannung des DC-DC Wandlers (5) auftritt, und ein Trennschalter (8) zwischen dem heruntergesetzten DC Knoten (11) und der Zwischensammelleitung (1a) mit der variablen Spannung angeordnet ist.

**11.** Wandler nach einem der Ansprüche 6 bis 10, wobei der DC-DC Wandler (5) einen Versorgungsschalter (9) aufweist, der zwischen dem Zwischensammelleiter (1a) mit der variablen Spannung und dem DC-Eingangsanschluss (12a) angeordnet ist, welcher die an den DC-Zwischenkreis anlegbare volle Spannung führt, wobei optional eine Versorgungsimpedanz (10) in Reihe mit dem Versorgungsschalter (9) angeordnet ist.

**12.** Wandler nach einem der Ansprüche 6 bis 10, wobei der DC-DC Wandler (5) einen Zweig aufweist, der wenigstens eines von einem Versorgungsschalter (9) und einer Versorgungsimpedanz (10, 14b) in Reihenschaltung zwischen der Zwischensammelleitung (1a) mit der variablen Spannung und einem Brückenknoten angeordnet aufweist, welcher so geschaltet werden kann, dass er entweder mit dem positiven DC-Eingangsanschluss (12a) oder dem negativen DC-Eingangsanschluss (12b) verbunden ist.

**13.** Wandler nach Anspruch 10, der eine zweite mehrphasige Schaltanordnung (4) aufweist, um jeden von den Antriebsanschlüssen (13) einzeln mit dem DC Eingangsanschluss (12a) zu verbinden, welcher die volle Spannung in Bezug auf den DC Zwischenkreis führt.

**14.** Wandler nach einem der Ansprüche 6 bis 13, wobei der mehrphasige Wechselrichter (2) Leistungsschalter aufweist, um selektiv die positive (1a) und die negative (1b) Zwischensammelleitung mit den drei oder mehr Antriebsanschlüssen zu verbinden, und wobei jeder von den Leistungsschaltern einen Halbleiterschalter und eine parallele Freilaufdiode aufweist.

## Revendications

1. Procédé d'alimentation d'une machine électrique (3) à courant alternatif au moyen d'un inverseur à modulation d'amplitude des pulsations alimentant la machine (3) à courant alternatif en énergie électrique par l'intermédiaire de trois connecteurs d'alimentation (13) ou plus,
**caractérisé en ce que** le procédé comprend les étapes qui consistent à
sur les trois ou plusieurs connecteurs d'entraînement (13), dans une séquence d'intervalles de couple et d'intervalles de mesure alternées :

    - appliquer une ou plusieurs impulsions de tension pendant les intervalles de coupl de manière à produire un couple dans la machine (3) à courant alternatif, les impulsions de tension ayant comme hauteur une première tension (Vt),
    - appliquer pendant les intervalles de mesure une ou plusieurs impulsions de tension servant à mesurer la position du rotor de la machine à courant alternatif,
    les impulsions de tension ayant comme hauteur une deuxième tension (Vm),
    - la deuxième tension (Vm) représentant au moins deux fois la première tension (Vt).

2. Procédé d'alimentation d'une machine électrique à courant alternatif selon la revendication 1, dans lequel l'inverseur de modulation d'amplitude des pulsations comprend un convertisseur continu-continu (5) qui délivre à un inverseur multiphase (2) une tension continue intermédiaire de liaison, l'inverseur multiphase (2) alimentant l'entraînement (3) en appliquant sélectivement la tension continue intermédiaire de liaison sur les trois ou plusieurs connecteurs d'entraînement (13),
le procédé comportant les étapes qui consistent à :

    pendant les intervalles de couple, amener le convertisseur continu-continu (5) à délivrer la tension continue intermédiaire de liaison qui correspond à la première tension (Vt) et commander l'inverseur multiphase (2) de telle sorte qu'il délivre la ou les impulsions de tension qui produisent le couple,
    pendant les intervalles de mesure, amener le convertisseur continu-continu (5) à délivrer la tension continue intermédiaire de liaison qui correspond à la deuxième tension (Vm) et amener l'inverseur multiphase (2) à délivrer une ou plusieurs impulsions aux connecteurs d'entraînement (13) de manière à mesurer la position du rotor de la machine à courant alternatif et à déterminer la position du rotor de la machine (3) à courant alternatif.

3. Procédé d'alimentation d'une machine électrique à courant alternatif selon les revendications 1 ou 2, dans lequel pendant une durée de transition (Ti), la tension continue intermédiaire de liaison passe de la première tension (Vt) à la deuxième tension (Vm) ou inversement, la longueur des intervalles de couple (Tt) étant supérieure à la longueur des intervalles de mesure plus la somme des durées de transition (Ti) qui précèdent et qui suivent les intervalles de mesure.

4. Procédé d'alimentation d'une machine électrique à courant alternatif selon l'une des revendications précédentes, dans lequel une tension continue intermédiaire de liaison alimente un inverseur multiphase (2) qui lui-même alimente les connecteurs d'entraînement (13), la vitesse de modification de la tension continue intermédiaire de liaison étant supérieure à 1 V/microseconde lors du passage de la première tension (Vt) à la deuxième tension (Vm) ou inversement.

5. Procédé d'alimentation d'une machine électrique à courant alternatif selon l'une des revendications précédentes, dans lequel au moins l'une des caractéristiques suivantes prévaut :

    la longueur (Tt) des intervalles de couple est inférieure à 1000 microsecondes,
    la longueur (Tm) des intervalles de mesure est inférieure à 500 microsecondes,
    la durée de transition (Ti) entre les intervalles de couple et les intervalles de mesure au cours de laquelle la tension continue intermédiaire de liaison passe de la première tension (Vt) à la deuxième tension (Vm) ou inversement est inférieure à 10 microsecondes ou
    la première tension (Vt) est de l'ordre de 0 V à 20 V et la deuxième tension (Vm) est de l'ordre de 20 V à 100 V.

6. Convertisseur servant à alimenter une machine électrique à courant alternatif, le convertisseur étant un inverseur à modulation de l'amplitude des impulsions qui est raccordé
du côté de l'alimentation à une ligne positive et une ligne négative du courant continu d'entrée (12a, 12b) et
du côté de l'entraînement à trois ou plusieurs connecteurs d'entraînement (13), et comprenant
un convertisseur continu-continu (5) raccordé aux lignes d'alimentation continues positives et négatives (12a, 12b) et alimentant une liaison continue intermédiaire qui présente une barre collectrice intermédiaire (1a) à tension variable et une barre collectrice intermédiaire (1b) à tension de référence,
un inverseur multiphase (2) raccordé à la barre collectrice intermédiaire à tension variable (1a) et à la barre collectrice intermédiaire à tension de référence (1b) et alimentant les trois ou plusieurs connecteurs d'entraînement (13),
**caractérisé en ce que**
le convertisseur comprend un module de commande (15) qui commande le branchement et le débranchement du commutateur de puissance du convertisseur continu-continu (5), le module de commande (15) étant configuré pour commander les commutateurs de puissance de telle sorte que sur les trois ou plusieurs connecteurs d'entraînement, dans une séquence d'intervalles de couple et d'intervalles de mesure alternées :

- pendant les intervalles de couple, ils appliquent une ou plusieurs impulsions de tension qui produisent un couple en raccordant les trois ou plusieurs connecteurs d'entraînement (13) à deux barres collectrices (1a, 1b) présentant entre elles une première différence de tension,

pendant les intervalles de mesure, ils appliquent une ou plusieurs impulsions de tension en vue de mesurer la position du rotor de la machine à courant alternatif en raccordant les trois ou plusieurs connecteurs d'alimentation (13) à deux barres collectrices (1a, 1b) présentant une deuxième différence de tension entre elles,
la deuxième tension représentant au moins deux fois la première différence de tension.

**7.** Convertisseur selon la revendication 6, dans lequel le convertisseur continu-continu (5) est un convertisseur abaisseur.

**8.** Convertisseur selon les revendications 6 ou 7, dans lequel le convertisseur continu-continu (5) comprend un condensateur discret (7) raccordé entre la barre collectrice intermédiaire à tension variable (1a) et la barre collectrice intermédiaire à tension de référence (1b), la capacité du condensateur discret (7) étant de moins de 50 microfarad et de préférence de moins de 30 microfarad.

**9.** Convertisseur selon les revendications 6 ou 7, dans lequel le convertisseur continu-continu (5) ne comprend pas de condensateur discret raccordé directement entre la barre collectrice intermédiaire à tension variable (1a) et la barre collectrice intermédiaire à tension de référence (1b).

**10.** Convertisseur selon l'une des revendications 6 à 8, dans lequel le convertisseur continu-continu (5) comprend un noeud continu (11) à tension plus basse sur lequel la sortie continue abaissée du convertisseur continu-continu (5) est appliquée et un commutateur de débranchement (8) agencé entre le noeud continu (11) à tension abaissée et la barre collectrice intermédiaire (1a) à tension variable.

**11.** Convertisseur selon l'une des revendications 6 à 10, dans lequel le convertisseur continu-continu (5) comprend un commutateur d'alimentation (9) agencé entre la barre collectrice intermédiaire (1a) à tension variable et la borne d'entrée continue (12a) qui porte la totalité de la tension apte à être appliquée sur la liaison continue intermédiaire, avec facultativement une impédance d'alimentation (10) agencée en série sur le commutateur d'alimentation (9).

**12.** Convertisseur selon l'une des revendications 6 à 10, dans lequel le convertisseur continu-continu (5) comprend une branche qui contient un commutateur d'alimentation (9) et/ou une impédance d'alimentation (10, 14b) raccordée en série entre la barre collectrice intermédiaire (1a) à tension variable et un noeud de pont qui peut être commuté de manière à être raccordé à la borne d'entrée continue positive (12a) ou à la borne d'entrée continue négative (12b).

**13.** Convertisseur selon la revendication 10, comprenant un deuxième agencement de commutation multiphase (4) qui raccorde individuellement chacun des connecteurs d'entraînement (13) à la borne d'entrée continue (12a) qui porte la totalité de la tension par rapport à la liaison continue intermédiaire.

**14.** Convertisseur selon l'une des revendications 6 à 13, dans lequel l'inverseur multiphase (2) comprend des commutateurs de puissance qui raccordent sélectivement la barre collectrice intermédiaire positive (1a) et la barre collectrice intermédiaire négative (1b) aux trois ou plusieurs connecteurs d'entraînement, chacun des commutateurs de puissance comprenant un commutateur à semi-conducteur et une diode libre raccordée en parallèle.

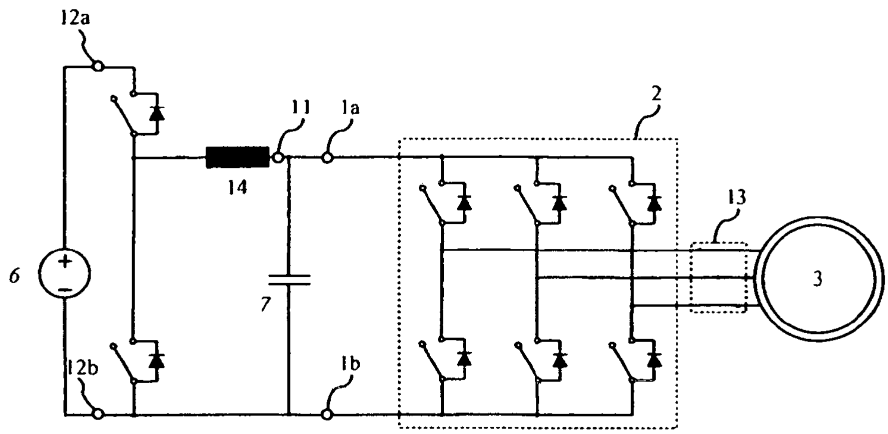


Fig. 1

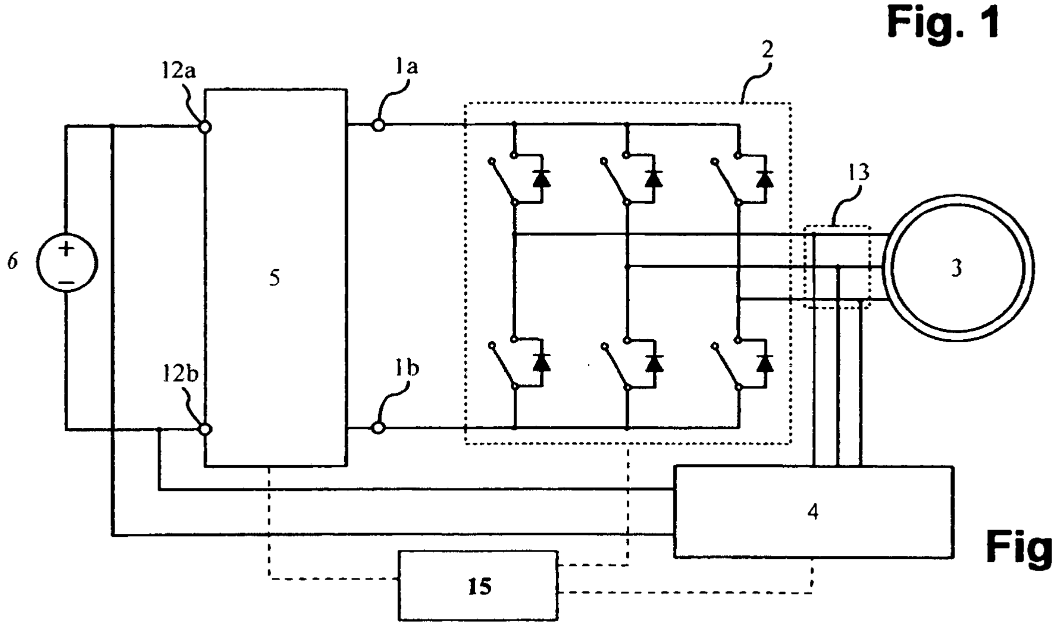


Fig. 2

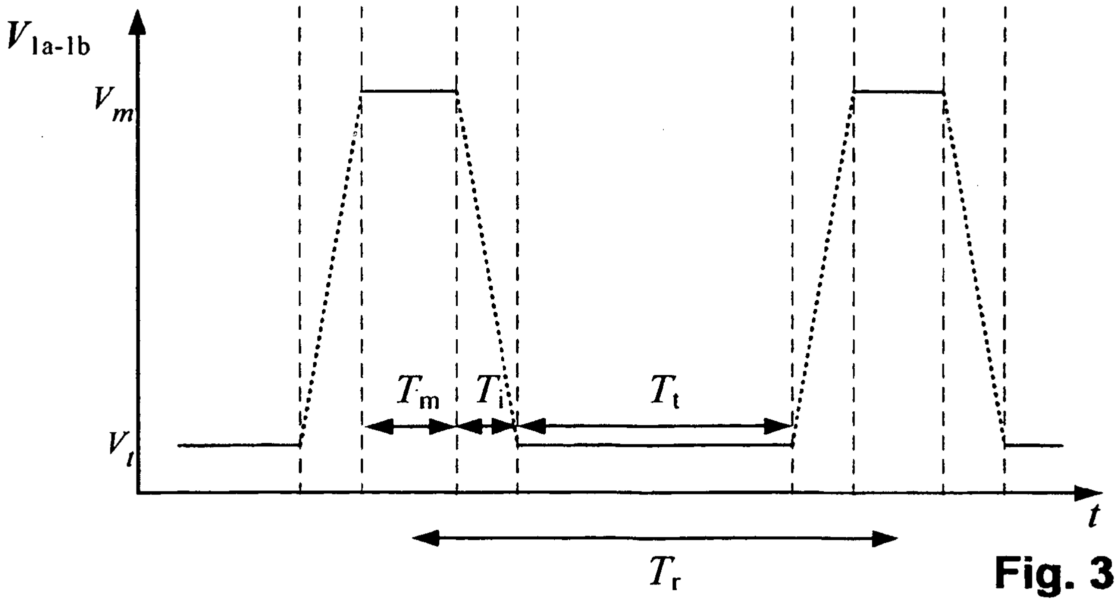


Fig. 3

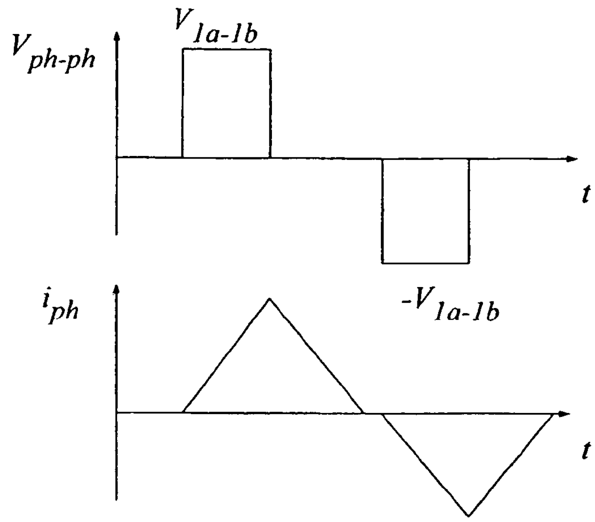


Fig. 4

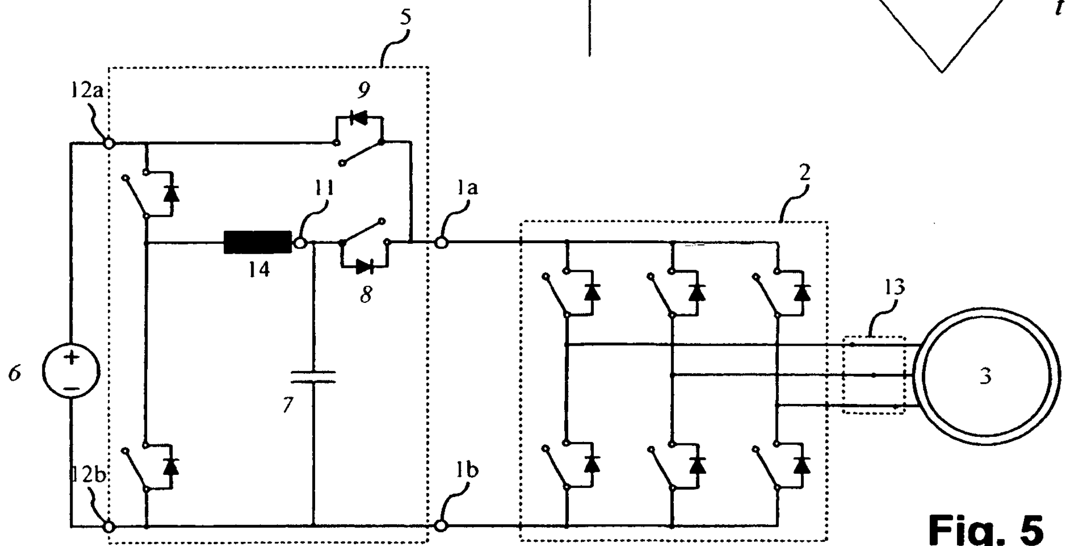


Fig. 5

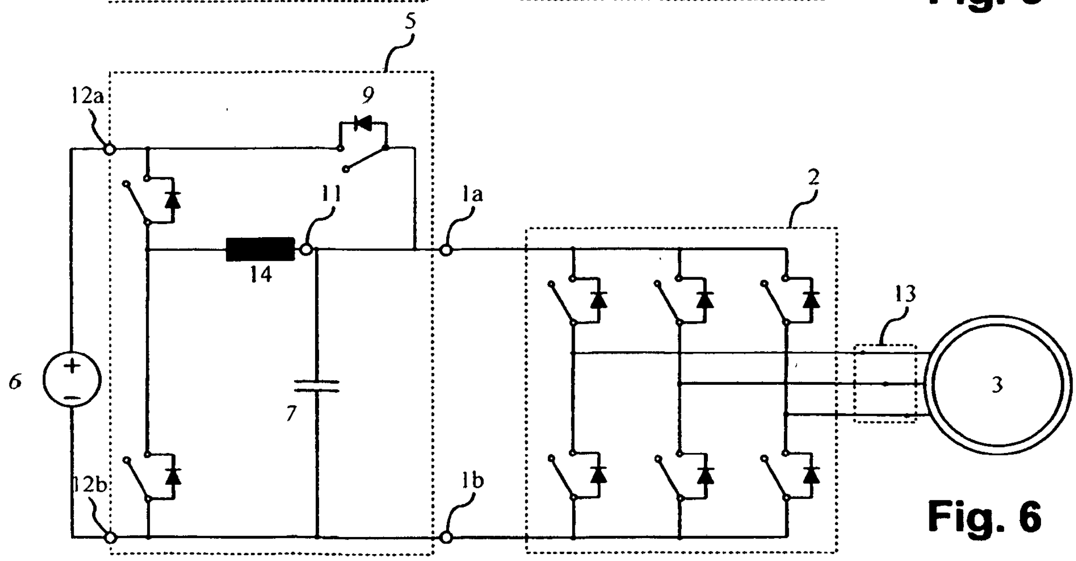


Fig. 6

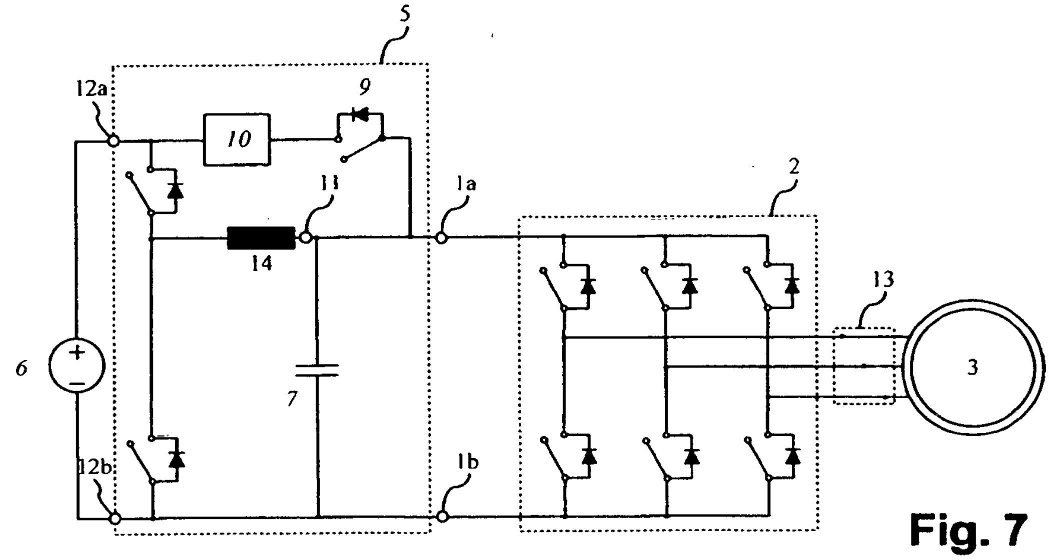


Fig. 7

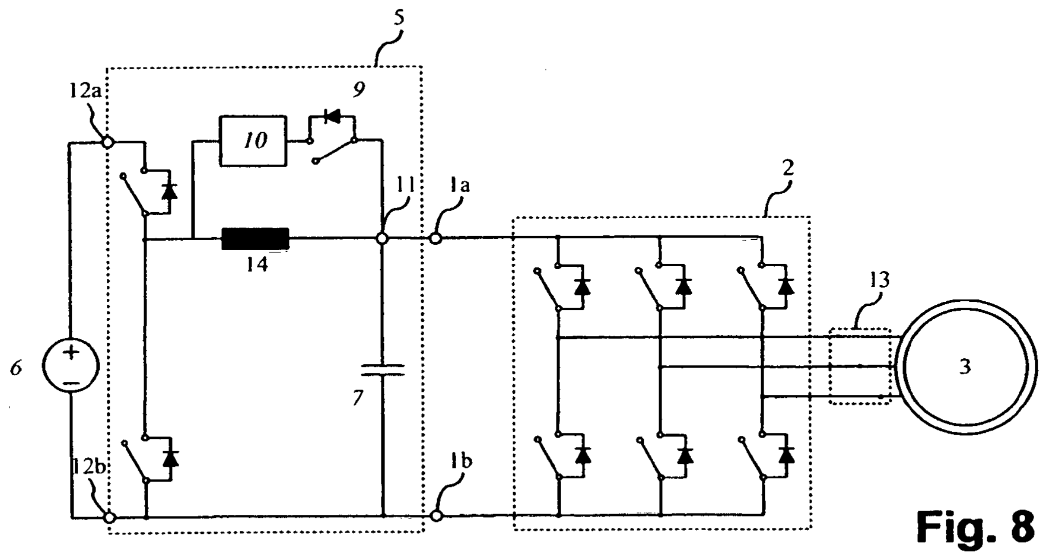


Fig. 8

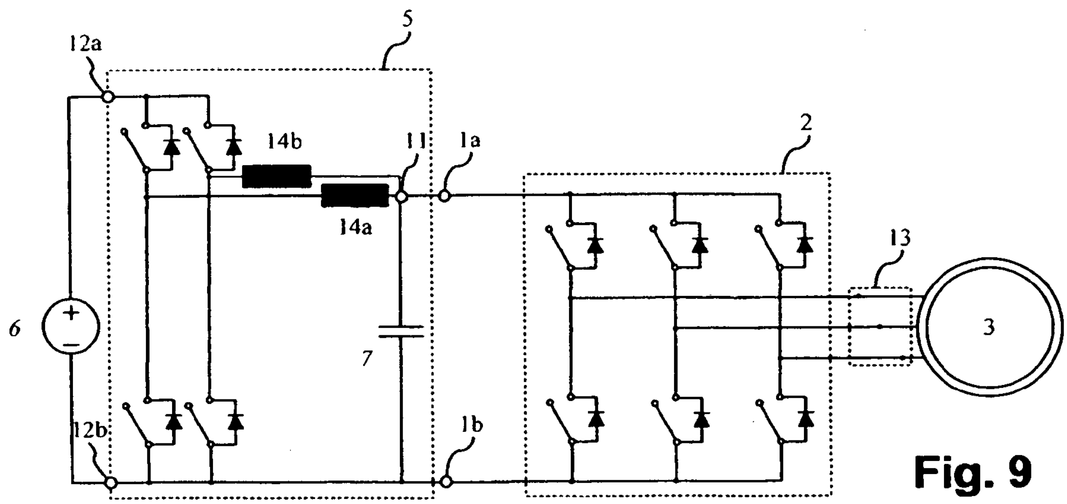


Fig. 9

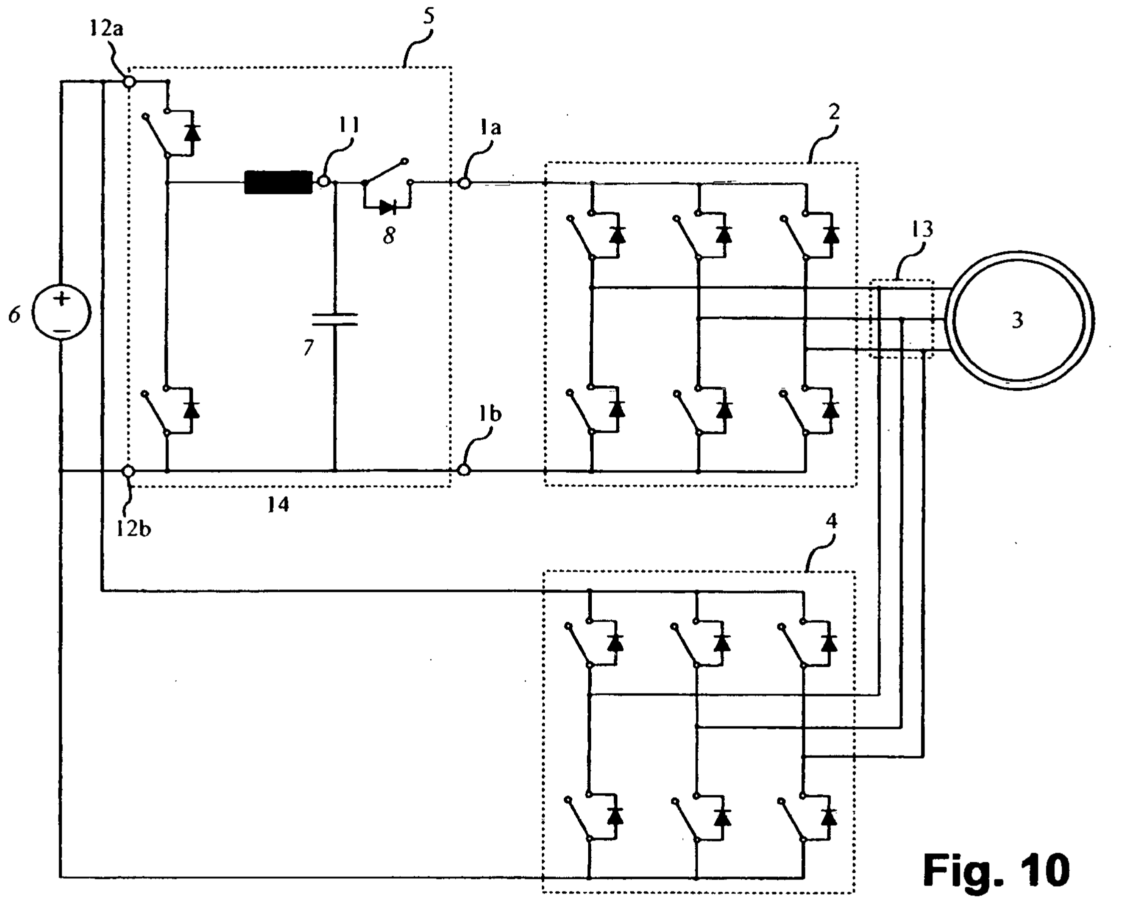


Fig. 10

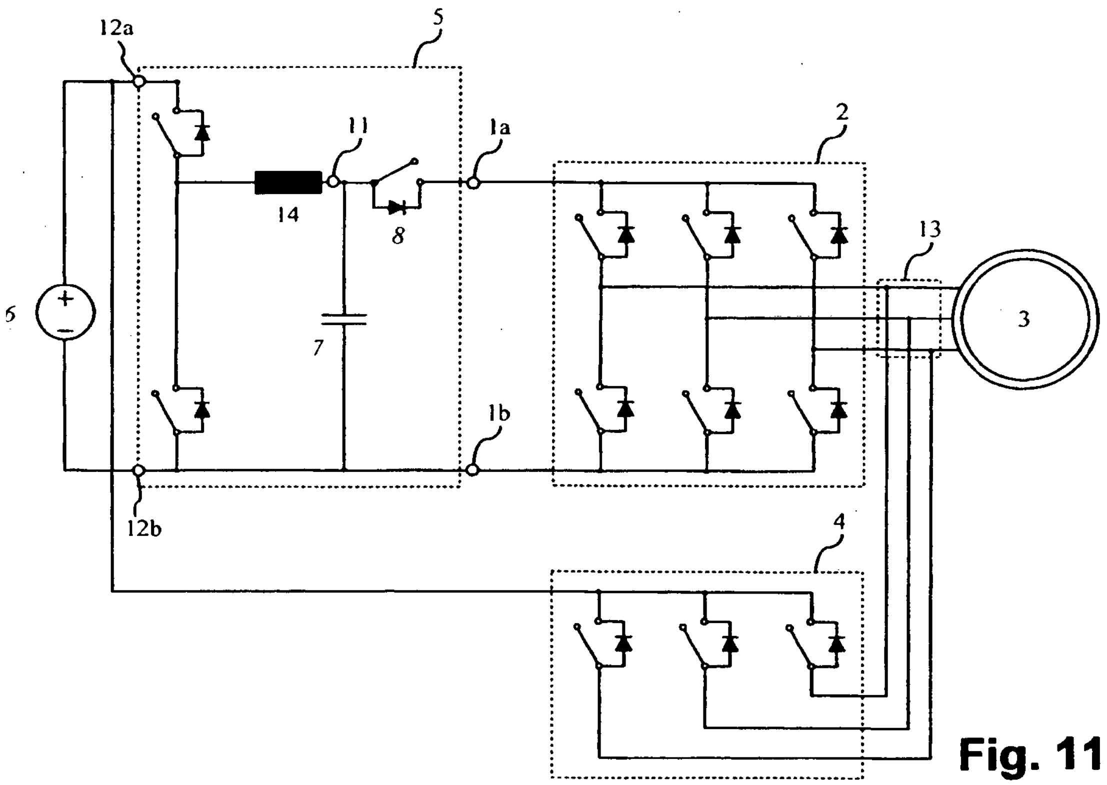


Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2003141865 A
- EP 0228535 A1
- JP 2009022085 A
- WO 9012278 A1
- JP 363095855 A
- US 2004136133 A
- US 2009153083 A
- WO 2006061679 A2


### Non-patent literature cited in the description


- **K TANIGUCHI ; A. OKUMURA.** A PAM inverter system for vector control of induction motor. *Proceedings of Power Conversion Conference (PCC '93,* 1993, 478-483
- **K.-H. KIM ; M.-J. YOUN.** Performance comparison of PWM inverter and variable dc link inverter schemes for high-speed sensorless control of BLDC motor. *Electronics Letters,* 2002, vol. 38 (21), 1294-1295
- **I. TAKAHASHI ; T KOGANEZAWA ; G. SU ; K. OHYAMA.** A super high speed PM motor drive system by a quasi-current source inverter. *IEEE Transactions on Industry Applications,* May 1994, vol. 30 (3), 683-690
- **M. SCHROEDL.** DETECTION OF THE ROTOR POSITION OF A PERMANENT MAGNET SYNCHRONOUS MACHINE AT STANDSTILL,. *Proceedings of ICEM,* 1988
- **P.B. SCHMIDT ; M.L. GASPERI ; G. RAY ; A.H. WIJENAYAKE.** Initial Rotor Angle Detection OfA Non-Salient Pole Permanent Magnet Synchronous Machine. *Proceedings of IEEE Industry Applications Society annual Meeting,* 1997